# EUROPEAN PATENT APPLICATION

(11) **EP 4 164 161 A1**
(43) Date of publication of application: **12.04.2023**
(21) Application number: 21832377.2
(22) Date of filing: 02.07.2021
(51) Int. Cl.: H04L 5/00, H04W 24/02

(54) **METHOD FOR TRANSMITTING CELL DOWNLINK FIXED RESOURCE, AND COMMUNICATION APPARATUS**

(30) Priority: 03.07.2020 CN 202010632132
(71) Applicant: Huawei Technologies Co., Ltd., Longgang District, Shenzhen, Guangdong 518129 (CN)
(72) Inventor: CUI, Jianming, Shenzhen, Guangdong 518129 (CN); HAN, Ding, Shenzhen, Guangdong 518129 (CN); CHANG, Yuchao, Shenzhen, Guangdong 518129 (CN); ZHENG, Xiaojun, Shenzhen, Guangdong 518129 (CN); XUE, Chunlin, Shenzhen, Guangdong 518129 (CN); ZHANG, Yunhan, Shenzhen, Guangdong 518129 (CN)
(74) Representative: Maiwald GmbH
(86) International application number: PCT/CN2021/104293
(87) International publication number: WO 2022/002258

(57) **Abstract**

This application provides a method for sending a cell downlink fixed resource and a communications apparatus, which are applied to an RRU networking scenario. In the method, a first network device configures a first sending time in which a first cell of the first network device sends a cell downlink fixed resource, and controls the first cell to send the cell downlink fixed resource in the first sending time. The first sending time is different from a sending time in which a neighboring cell of the first cell sends the cell downlink fixed resource, and the first cell and the neighboring cell of the first cell carry a same frequency. By using this application, interference between cell downlink fixed resources sent by neighboring cells may be reduced, thereby improving performance of a single-RAT system; and interference caused by a cell downlink fixed resource to another resource (for example, a data channel) may be reduced, thereby facilitating an improvement in performance of a multi-RAT system.

## Description

This application claims priority to Chinese Patent Application No. 202010632132.1, filed with the China National Intellectual Property Administration on July 3, 2020 and entitled "METHOD FOR SENDING CELL DOWNLINK FIXED RESOURCE AND COMMUNICATIONS APPARATUS", which is incorporated herein by reference in its entirety.

### TECHNICAL FIELD

This application relates to the field of communications technologies, and in particular, to a method for sending a cell downlink fixed resource and a communications apparatus.

### BACKGROUND

In a communications system, interference between neighboring cells is an important factor that affects a signal-to-noise ratio and system performance of a terminal device. The neighboring cells may be neighboring cells served by a same network device, or may be neighboring cells served by different network devices. For example, a cell 1 is adjacent to a cell 2, the cell 1 is a cell served by a network device 1, and the cell 2 is a cell served by a network device 2.

Same channels or signals sent by neighboring cells may interfere with each other. For example, in a single-RAT system, same cell-level measurement reference signals sent by neighboring cells may interfere with each other. The single-RAT system is, for example, a new radio (new radio, NR) system or a long term evolution (long term evolution, LTE) system.

Different channels or signals sent by neighboring cells may also interfere with each other. For example, in a multi-RAT system, a common channel sent by a cell 1 in a fixed manner based on a configured periodicity may cause interference to a data channel, a reference signal, or the like sent by a cell 2. The multi-RAT system is, for example, an NR system and an LTE system that share a frequency spectrum. A common channel sent by a cell 1 in the NR system in a fixed manner based on a configured periodicity may cause interference to a data channel, a reference signal, or the like sent by a cell 2 in the LTE system. Consequently, LTE performance is affected.

Therefore, how to reduce neighboring cell interference is a technical problem to be urgently resolved.

### SUMMARY

This application provides a method for sending a cell downlink fixed resource and a communications apparatus, to reduce neighboring cell interference, thereby improving system performance.

A first aspect of this application provides a method for sending a cell downlink fixed resource. The method is applied to a first network device. The method may be performed by the first network device, or may be performed by an apparatus (for example, a processor or a chip) in the first network device. The first network device is used as an example, and the method includes the following content.

The first network device configures a first sending time of a cell downlink fixed resource for a first cell served by the first network device, and controls the first cell to send the cell downlink fixed resource in the first sending time. The first sending time is different from a sending time in which a neighboring cell of the first cell sends the cell downlink fixed resource, and the first cell and the neighboring cell of the first cell carry a same frequency.

In the foregoing method, sending times in which neighboring cells send cell downlink fixed resources are different, so that the cell downlink fixed resources sent by the neighboring cells are staggered in time domain and space domain, thereby reducing interference between the cell downlink fixed resources, and facilitating an improvement in performance of a single-RAT system. Further, interference caused by a cell downlink fixed resource to another resource (for example, a data channel or a reference signal) may be reduced, thereby facilitating an improvement in performance of a multi-RAT system.

The cell downlink fixed resource may be a cell-level measurement reference signal, or may be a common channel.

In a possible implementation, the neighboring cell of the first cell may be a second cell served by the first network device, that is, the first cell and the second cell belong to a coverage area of the first network device, and the first cell is adjacent to the second cell. In this case, the sending time in which the second cell sends the cell downlink fixed resource may be referred to as a second sending time. The first network device controls the second cell to send the cell downlink fixed resource in the second sending time, so that sending times in which neighboring cells served by the same network device send cell downlink fixed resources are different, thereby reducing interference between cell downlink fixed resources served by the same network device.

In a possible implementation, the first network device further configures a third sending time in which a third cell of the first network device sends the cell downlink fixed resource, where the third sending time is different from both the first sending time and the second sending time. The first network device controls the third cell of the first network device to send the cell downlink fixed resource in the third sending time. The third cell and the first cell carry a same frequency. The first network device may control the three cells served by the first network device not to send cell downlink fixed resources at a same time, so that cell downlink fixed resources sent by the three cells are isolated from each other in time domain and space domain, thereby reducing interference between cell downlink fixed resources sent by the same network device.

It may be understood that different cells of the same network device send cell downlink fixed resources in different sending times, that is, the same network device sends cell downlink fixed resources in different directions and different sending times, so that the cell downlink fixed resources are isolated from each other in time domain and space domain.

In a possible implementation, first interval duration between the first sending time and the second sending time is different from second interval duration between the second sending time and the third sending time. It may be understood that, relative to a sending time in which the three cells simultaneously send cell downlink fixed resources, sending times in which the three cells of the first network device send cell downlink fixed resources have frame offsets, and the frame offsets of the three cells are different. In this way, the first network device may flexibly configure a sending time in which each cell sends the cell downlink fixed resource.

In a possible implementation, first interval duration between the first sending time and the second sending time is the same as second interval duration between the second sending time and the third sending time. It may be understood that sending times in which the three cells of the first network device send cell downlink fixed resources are periodic, so that a terminal device may periodically scan the cell downlink fixed resources.

In a possible implementation, the first network device further controls the first cell to send the cell downlink fixed resource in a fourth sending time, controls the second cell to send the cell downlink fixed resource in a fifth sending time, and controls the third cell to send the cell downlink fixed resource in a sixth sending time. Interval duration between the fourth sending time and the fifth sending time is the same as the first interval duration, and fourth interval duration between the fifth sending time and the sixth sending time is the same as the second interval duration. That the first network device includes three cells is used as an example. The first network device controls the first cell to periodically send the cell downlink fixed resource, controls the second cell to periodically send the cell downlink fixed resource, and controls the third cell to periodically send the cell downlink fixed resource. Periods in which the cells send cell downlink fixed resources may be the same, but sending times in which the cells send cell downlink fixed resources are different.

In a possible implementation, the first cell, the second cell, and the third cell belong to a logical combined cell. That is, the first cell, the second cell, and the third cell are logically considered as one cell. In a resource sending periodicity of the logical combined cell, the first network device controls the first cell to send the cell downlink fixed resource in the first sending time, controls the second cell to send the cell downlink fixed resource in the second sending time, and controls the third cell to send the cell downlink fixed resource in the third sending time. It may be understood that, in the resource sending periodicity of the logical combined cell, the first network device controls the three cells not to simultaneously send cell downlink fixed resources. This sending manner may be understood as a beam scanning manner, and the sending periodicity of the logical combined cell is a beam scanning periodicity. The beam scanning manner is used, so that interference between cell downlink fixed resources sent by the cells may be reduced; overheads of a common channel may be reduced, and spectral efficiency may be improved; and symbol overheads of the cell downlink fixed resources may be reduced, thereby facilitating energy saving.

In a possible implementation, the neighboring cell of the first cell is a fourth cell served by a second network device, and the first network device obtains, from the second network device, a sending time in which the fourth cell sends the cell downlink fixed resource, so that the first sending time configured by the first network device for the first cell of the first network device is different from the sending time in which the fourth cell sends the cell downlink fixed resource, thereby reducing interference between neighboring cells of different network devices.

It may be understood that neighboring cells of different network devices send cell downlink fixed resources in different sending times, that is, different network devices send cell downlink fixed resources in different directions and different sending times, so that the cell downlink fixed resources are isolated from each other in time domain and space domain.

A second aspect of this application provides a communications apparatus. The communications apparatus has some or all functions of the first network device in the first aspect. For example, the apparatus may have functions of a network device in some or all embodiments of this application, or may have a function of independently implementing any embodiment of this application. The function may be implemented by hardware, or may be implemented by hardware executing corresponding software. The hardware or the software includes one or more units or modules corresponding to the function.

In a possible design, a structure of the communications apparatus may include a processing unit and a communications unit. The processing unit is configured to support the communications apparatus in performing a corresponding function in the foregoing method. The communications unit is configured to support communication between the communications apparatus and another device. The communications apparatus may further include a storage unit. The storage unit is configured to be coupled to the processing unit and the communications unit, and stores program instructions and data that are necessary for the communications apparatus.

In an implementation, the communications apparatus includes a processing unit and a communications unit.

The processing unit is configured to configure a first sending time in which a first cell of the first network device sends a cell downlink fixed resource. The communications unit is configured to control the first cell to send the cell downlink fixed resource in the first sending time. The first sending time is different from a sending time in which a neighboring cell of the first cell sends the cell downlink fixed resource, and the first cell and the neighboring cell of the first cell carry a same frequency.

In an example, the communications unit may be a transceiver or a communications interface, and the processing unit may be a processor.

In an implementation, the communications apparatus includes:
a processor, configured to configure a first sending time in which a first cell of the first network device sends a cell downlink fixed resource; and a transceiver, configured to control the first cell to send the cell downlink fixed resource in the first sending time. The first sending time is different from a sending time in which a neighboring cell of the first cell sends the cell downlink fixed resource, and the first cell and the neighboring cell of the first cell carry a same frequency.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. Such a chip may be referred to as a system on chip (System on Chip). Whether the components are independently disposed on different chips or are integrated and disposed on one or more chips usually depends on requirements of a product design. This embodiment of this application imposes no limitation on specific implementations of the foregoing components.

A third aspect of this application provides a processor, configured to perform the methods in the first aspect. In a process of performing the methods, processes of sending a signal and receiving a signal in the foregoing methods may be understood as a process of outputting a signal by the processor and a process of receiving an input signal by the processor. Specifically, when outputting a signal, the processor outputs the signal to a transceiver, so that the transceiver transmits the signal. Further, after the signal is output by the processor, other processing may need to be performed before the signal reaches the transceiver. Similarly, when the processor receives an input signal, the transceiver receives the signal, and inputs the signal to the processor. Further, after the transceiver receives the signal, other processing may need to be performed on the signal before the signal is input to the processor.

In this way, if there is no special description about operations such as transmitting, sending, and receiving related to the processor, or if the operations do not conflict with actual functions or intrinsic logic of the operations in related descriptions, the operations may be more generally understood as operations such as outputting, receiving, and inputting performed by the processor, rather than transmitting, sending, and receiving operations performed directly by a radio frequency circuit and an antenna.

In a specific implementation process, the processor may be a processor specially configured to perform the methods, or may be a processor, for example, a general-purpose processor, that executes computer instructions in a memory to perform the methods. The memory may be a non-transitory (non-transitory) memory, such as a read only memory (read only memory, ROM). The memory and the processor may be integrated into one chip, or may be separately disposed on different chips. A type of the memory and a manner in which the memory and the processor are disposed are not limited in this application.

A fourth aspect of this application provides a computer-readable storage medium, configured to store computer software instructions, and when the instructions are executed by a communications apparatus, the method according to the first aspect is implemented.

A fifth aspect of this application further provides a computer program product including instructions. When the computer program product is run on a communications apparatus, the communications apparatus is enabled to perform the method according to the first aspect.

A sixth aspect of this application provides a chip system. The chip system includes a processor, the processor is coupled to a memory, and the memory is configured to store a program. When the program is executed by the processor, an apparatus including a chip is enabled to perform the method according to the first aspect. In a design, the chip system may further include an interface, and the interface is configured to obtain a program or instructions from the memory. The chip system may include a chip, or may include a chip and another discrete device.

### BRIEF DESCRIPTION OF DRAWINGS

FIG. 1 is a schematic diagram of cell combination;
FIG. 2 is a schematic diagram of a network architecture according to an embodiment of this application;
FIG. 3a is a schematic diagram of sending an SSB by one network device;
FIG. 3b is a schematic diagram of sending SSBs by a plurality of network devices;
FIG. 4 is a schematic flowchart of a method for sending a cell downlink fixed resource according to an embodiment of this application;
FIG. 5 is a schematic diagram of sending an SSB by one network device according to an embodiment of this application;
FIG. 6 is a schematic diagram of sending SSBs by a plurality of network devices according to an embodiment of this application;
FIG. 7 is another schematic diagram of sending an SSB by one network device according to an embodiment of this application;
FIG. 8 is a schematic diagram of a structure of a communications apparatus according to an embodiment of this application; and
FIG. 9 is a schematic diagram of a structure of another communications apparatus according to an embodiment of this application.

### DESCRIPTION OF EMBODIMENTS

For ease of understanding of embodiments disclosed in this application, related terms are briefly described.

### 1. Logical combined cell

Cells carrying a same frequency may be referred to as intra-frequency cells. For example, a cell 1 and a cell 2 carry a same frequency. Therefore, the cell 1 and the cell 2 are intra-frequency cells. For ease of description, in embodiments of this application, the cells are intra-frequency cells.

A network device may combine a plurality of intra-frequency cells into one logical combined cell by using a single frequency network (single frequency network, SFN) technology. Alternatively, the network device may combine a plurality of intra-frequency cells into one logical combined cell by using an adaptive single frequency network (adaptive single frequency network, ASFN) technology. The logical combined cell may also be referred to as an SFN cell, an ASFN cell, or the like.

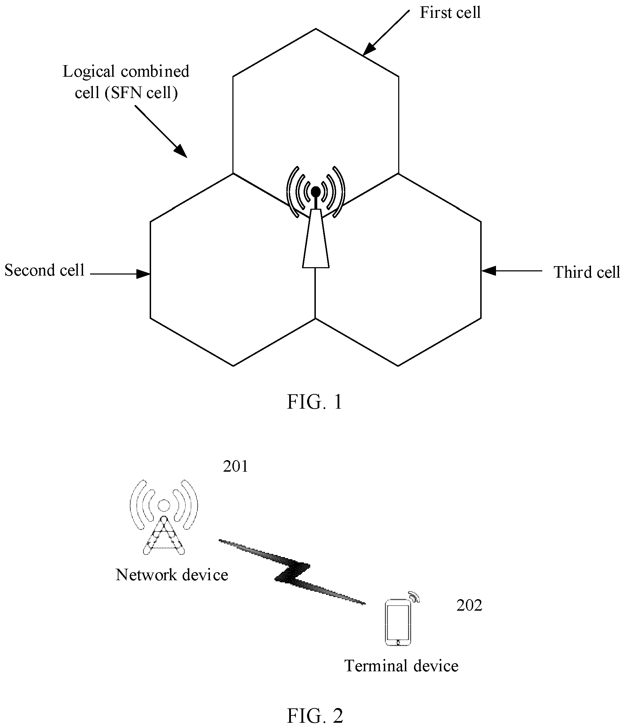

For example, FIG. 1 is a schematic diagram of cell combination. As shown in FIG. 1, the network device combines a first cell, a second cell, and a third cell into one logical combined cell. The first cell, the second cell, and the third cell may be intra-frequency cells served by a same network device, or may be intra-frequency cells served by different network devices.

### 2. Cell downlink fixed resource

In this application, the cell downlink fixed resource is a cell resource that is sent by a network device in a fixed manner. The fixed sending may be understood as periodic sending or sending based on a pre-configuration. The cell downlink fixed resource may also be described as a cell resource sent in a fixed manner, a cell resource transmitted in a fixed manner, or the like. The cell downlink fixed resource may be a cell-level measurement reference signal, for example, a channel state information-reference signal (channel state information-reference signal, CSI-RS); may be a common channel, for example, a physical broadcast channel (physical broadcast channel, PBCH) or a common (common) physical downlink control channel (physical downlink control channel, PDCCH); or may be a signal carried on a common channel, for example, a synchronization signal/physical broadcast channel block (synchronization signal/physical broadcast channel block, SSB). In this application, an example in which the cell downlink fixed resource is an SSB is used as an example for description.

### 3. Sending time

The sending time may also be described as a sending occasion, a time domain resource, a time unit, or the like. In this application, the sending time is a time for sending a reference signal. A unit of the sending time may be a radio frame, a subframe, a slot (slot), a mini slot (mini slot), or the like; or may be a time window including a plurality of frames or subframes, for example, a system information (system information, SI) window. A time length of the sending time is not limited in embodiments of this application.

FIG. 2 is a schematic diagram of a network architecture according to this application. The network architecture may include a network device 201 and a terminal device 202. Quantities and forms of the devices shown in FIG. 2 are used as an example, and do not constitute a limitation on this application. For example, in actual application, the network architecture includes two or more terminal devices.

The network device 201 may be a device having wireless receiving and sending functions, or a chip that may be disposed in the device. The network device 201 may alternatively be a base station. The base station may be in a plurality of forms, for example, a macro base station, a micro base station, a relay station, and an access point. The base station may be a base station in a long term evolution (long term evolution, LTE) system, may be a base station in a new radio (new radio, NR) system, or may be a base station in a future communications system. In this application, the network device 201 may support an RRU networking scenario, for example, an RRU networking scenario of two-transmit (transmit, T) and two-receive (receive, R), 4T4R, or 8T8R.

The terminal device 202 may also be referred to as user equipment (user equipment, UE), an access terminal, a subscriber unit, a subscriber station, a mobile station, a remote station, a remote terminal, a mobile device, a user terminal, a terminal, a wireless communications device, a user agent, a user apparatus, or the like. The terminal device in embodiments of this application may be a mobile phone (mobile phone), a tablet computer (Pad), a computer having wireless receiving and sending functions, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

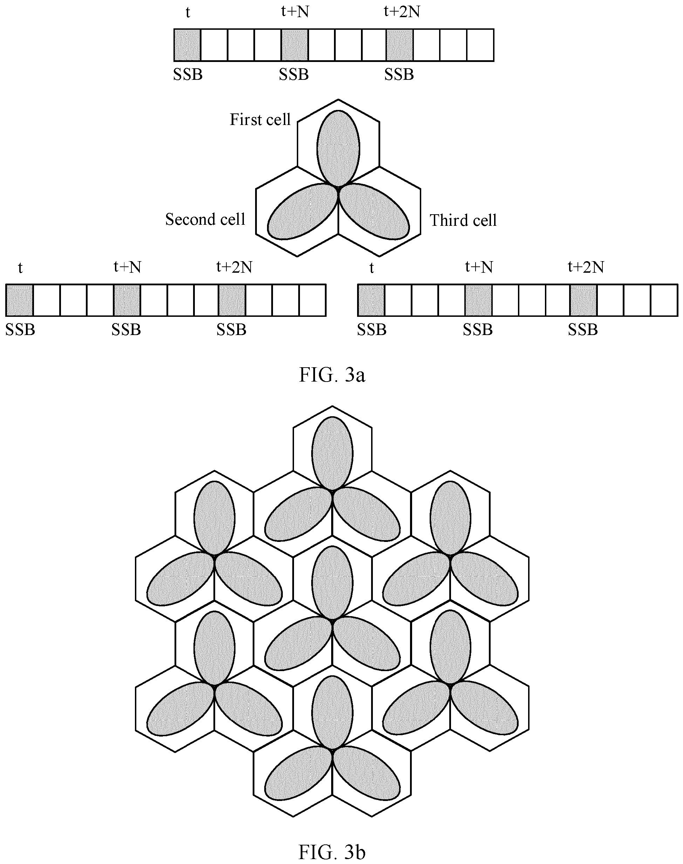

FIG. 3a is a schematic diagram of sending an SSB by one network device. In FIG. 3a, a hexagon represents a cell, and an ellipse in each hexagon represents a beam used to send an SSB. The network device includes three cells, which are respectively a first cell, a second cell, and a third cell, and the three cells carry a same frequency. A time domain resource on which the first cell sends an SSB, a time domain resource on which the second cell sends an SSB, and a time domain resource on which the third cell sends an SSB are the same. That is, the first cell, the second cell, and the third cell send SSBs on a same time-frequency resource.

In FIG. 3a, the first cell, the second cell, and the third cell all send SSBs in a time t, send SSBs in a time t + N, and send SSBs in a time t + 2N. It may be understood that the first cell, the second cell, and the third cell all periodically and simultaneously send SSBs, a sending periodicity of the SSBs is N, and N is a positive integer. In this way, the first cell, the second cell, and the third cell send SSBs on the same time-frequency resource, and the SSBs sent by the cells collide in time domain and frequency domain. Therefore, the cells interfere with each other. In addition, because the three cells respectively use wide beams to send SSBs, spatial isolation between the wide beams for sending by the three cells is low, thereby further aggravating interference between the cells.

FIG. 3b is a schematic diagram of sending SSBs by a plurality of network devices. FIG. 3b is a remote radio unit (remote radio unit, RRU) continuous networking scenario. All cells of all network devices send SSBs on a same time-frequency resource. Therefore, there is also interference between neighboring cells of different network devices.

The interference may be interference between SSBs sent by neighboring cells, or may be interference caused by an SSB periodically sent by one cell to a data channel sent by a neighboring cell of the cell. For example, an NR system shares a frequency spectrum with an LTE system, and a time-frequency resource of an SSB periodically sent by a cell 1 under the NR system is the same as a time-frequency resource of a data channel sent by a cell 2 under the LTE system. In this case, the SSB sent by the cell 1 causes interference to the data channel sent by the cell 2, thereby affecting data obtaining from the data channel by a terminal device. The cell 1 is adjacent to the cell 2.

In view of this, embodiments of this application provide a method for sending a cell downlink fixed resource and a communications apparatus. Neighboring cells send cell downlink fixed resources in different sending times, so that the cell downlink fixed resources sent by the neighboring cells are staggered in time domain and space domain, thereby reducing neighboring cell interference, and facilitating an improvement in system performance.

Technical solutions of this application may be applied to various single-RAT communications systems. For example, the technical solutions of this application may be applied to a 5G system, which may also be referred to as a new radio (new radio, NR) system; or may be applied to a long term evolution (long term evolution, LTE) system; or may be applied to a future communications system. The technical solutions of this application may be further applied to a multi-RAT communications system, for example, an NR system and an LTE system that share a frequency spectrum.

A network architecture and a service scenario described in embodiments disclosed in this application are intended to describe the technical solutions in embodiments disclosed in this application more clearly, and do not constitute a limitation on the technical solutions provided in embodiments disclosed in this application. A person of ordinary skill in the art may know that with evolution of the network architecture and emergence of a new service scenario, the technical solutions provided in embodiments disclosed in this application are also applicable to similar technical problems.

The following describes the method for sending a cell downlink fixed resource provided in this application.

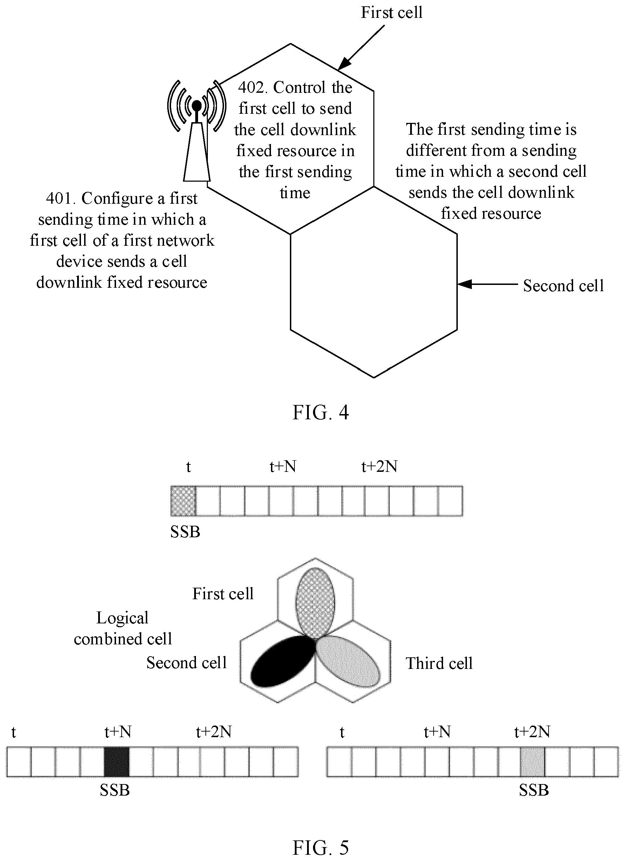

FIG. 4 is a schematic flowchart of a method for sending a cell downlink fixed resource according to this application. The procedure may include but is not limited to the following steps:
Step 401: A first network device configures a first sending time in which a first cell of the first network device sends a cell downlink fixed resource.
   The first network device may be any network device in a network architecture.
Step 402: The first network device controls the first cell to send the cell downlink fixed resource in the first sending time.

The first sending time is different from a sending time in which a neighboring cell of the first cell sends the cell downlink fixed resource, thereby reducing interference between cell downlink fixed resources sent by neighboring cells, and reducing interference caused by a cell downlink fixed resource to another resource (for example, a data channel or a reference signal). The first cell and the neighboring cell of the first cell carry a same frequency. That is, the first cell and the neighboring cell of the first cell are intra-frequency cells.

The following describes two cases.

Case 1: The neighboring cell of the first cell is a second cell served by the first network device. That is, the first cell and the second cell belong to a coverage area of the first network device, and the first cell is adjacent to the second cell. In this case, the sending time in which the second cell sends the cell downlink fixed resource may be referred to as a second sending time, and the second sending time is different from the first sending time. The first network device controls the second cell to send the cell downlink fixed resource in the second sending time, so that sending times in which neighboring cells served by the same network device send cell downlink fixed resources are different, thereby reducing interference between cell downlink fixed resources served by the same network device.

It may be understood that the first network device configures the first sending time in which the first cell sends the cell downlink fixed resource, configures the second sending time in which the second cell sends the cell downlink fixed resource, controls the first cell to send the cell downlink fixed resource in the first sending time, and controls the second cell to send the cell downlink fixed resource in the second sending time.

Further, when the first network device includes three cells, the first network device further configures a third sending time in which a third cell sends the cell downlink fixed resource, and controls the third cell to send the cell downlink fixed resource in the third sending time. The third sending time is different from both the first sending time and the second sending time.

In the first sending time, the first network device controls the first cell to send the cell downlink fixed resource, and therefore, a terminal device located in the first cell may detect, through scanning, the cell downlink fixed resource sent by the first cell. In the second sending time, the first network device controls the second cell to send the cell downlink fixed resource, and therefore, a terminal device located in the second cell may detect, through scanning, the cell downlink fixed resource sent by the second cell. In the third sending time, the first network device controls the third cell to send the cell downlink fixed resource, and therefore, a terminal device located in the third cell may detect, through scanning, the cell downlink fixed resource sent by the third cell.

When the first network device includes three cells, the first network device may simultaneously configure the first sending time, the second sending time, and the third sending time, and the sending times are different. For example, the first sending time is earlier than the second sending time, and the second sending time is earlier than the third sending time. Further, when the first network device includes more than three cells, the first network device may simultaneously configure sending times in which the cells send cell downlink fixed resources, and the sending times of the cells are different. In this embodiment of this application, an order in which the sending times of the cells are configured is not limited.

In a possible implementation, when the sending times of the three cells are configured, interval duration between the three sending times may be configured to be the same. That is, interval duration between the first sending time and the second sending time is the same as interval duration between the second sending time and the third sending time. It may be understood that the sending times in which the three cells of the first network device send references are periodic, so that a terminal device may periodically scan the cell downlink fixed resources.

Further, the sending times in which the three cells send cell downlink fixed resources may be in a resource sending periodicity of one logical combined cell. For a logical combined cell manner in which the three cells send cell downlink fixed resources, refer to a specific description in Embodiment 1.

In a possible implementation, when the sending times of the three cells are configured, interval duration between the three sending times may alternatively be configured to be different. That is, interval duration between the first sending time and the second sending time is different from interval duration between the second sending time and the third sending time. It may be understood that, relative to a same sending time of the three cells, that is, the three cells simultaneously send cell downlink fixed resources, the sending times in which the three cells send cell downlink fixed resources have frame offsets, and the frame offsets of the three cells are different. The first network device may flexibly configure a sending time of a cell downlink fixed resource for each intra-frequency cell. For a manner in which different frame offsets are configured for the three cells, refer to a specific description in Embodiment 2.

In a possible implementation, the first network device further controls the first cell to send the cell downlink fixed resource in a fourth sending time, controls the second cell to send the cell downlink fixed resource in a fifth sending time, and controls the third cell to send the cell downlink fixed resource in a sixth sending time. There is interval duration between the sixth sending time and the fifth sending time. Interval duration between the fourth sending time and the fifth sending time is the same as the interval duration between the first sending time and the second sending time, and interval duration between the fifth sending time and the sixth sending time is the same as the interval duration between the second sending time and the third sending time.

In this way, the first network device separately controls the first cell, the second cell, and the third cell to periodically send cell downlink fixed resources. When periods in which the cells send cell downlink fixed resources are the same, sending times in which the cells send cell downlink fixed resources are different.

Case 2: The neighboring cell of the first cell is a fourth cell of a second network device.

In addition to cell downlink fixed resources sent by three cells served by a same network device on a same time domain resource, cell downlink fixed resources sent by neighboring cells of different network devices on a same video resource also interfere with each other. The first network device configures the first sending time of the first cell to be different from a sending time of the fourth cell, so that interference between cell downlink fixed resources sent by the first cell and the fourth cell may be reduced.

The first network device may obtain, from the second network device by using an interface between network devices, a sending time in which the fourth cell sends the cell downlink fixed resource. The sending time in which the fourth cell sends the cell downlink fixed resource may be configured by the second network device.

In the embodiment shown in FIG. 4, sending times in which neighboring cells send cell downlink fixed resources are different, so that the cell downlink fixed resources sent by the neighboring cells are staggered in time domain and space domain, thereby reducing interference between the cell downlink fixed resources, and facilitating an improvement in performance of a single-RAT system. Further, interference caused by a cell downlink fixed resource to another resource (for example, a data channel or a reference signal) may be reduced, thereby facilitating an improvement in performance of a multi-RAT system.

The following describes Embodiment 1 and Embodiment 2 in detail.

### Embodiment 1 - Three cells send SSBs in a logical combined cell manner

FIG. 5 is a schematic diagram of sending an SSB by one network device according to an embodiment of this application. As shown in FIG. 5, an example in which the network device includes three cells (which are respectively a first cell, a second cell, and a third cell), and each cell separately sends an SSB to a terminal device in the cell is used for description. FIG. 5 may be applied to a time division duplex (time division duplexing, TDD) network and a frequency division duplex (frequency division duplexing, FDD) network. Before separately configuring sending times of the three cells, the network device first combines the three cells into one logical combined cell. For example, a technology such as an SFN technology or an ASFN technology is used to combine the three cells into one logical combined cell.

In FIG. 5, a hexagon represents a cell, and an ellipse represents a beam. When the network device sends an SSB, one cell sends an SSB by using one beam. An SSB sent by the first cell is represented by a slash, an SSB sent by the second cell is represented by black, and an SSB sent by the third cell is represented by gray. A rectangle in FIG. 5 represents a unit of a sending time. For ease of description, in this embodiment of this application, an example in which the unit of the sending time is a slot (slot) is used for description.

For example, a first cell in a network device i is denoted by Cell [0, i], a second cell in the network device i is denoted by Cell [1, i], and a third cell in the network device i is denoted by Cell [2, i].

After the network device i combines the three cells, as shown in FIG. 5, the network device i controls the first cell to send a cell downlink fixed resource in a slot t, controls the second cell to send a cell downlink fixed resource in a slot t + N, and controls the third cell to send a cell downlink fixed resource in a slot t + 2N. The network device i controls the first cell to send a cell downlink fixed resource in a slot t + 3N, controls the second cell to send a cell downlink fixed resource in a slot t + 4N, and controls the third cell to send a cell downlink fixed resource in a slot t + 5N, and so on.

It may be understood that, for the logical combined cell, the sending manner shown in FIG. 5 is a beam scanning manner, and a sending periodicity of the logical combined cell is a beam scanning periodicity, that is, 3N. For the logical combined cell, three beams are used to send cell downlink fixed resources, and the three beams have different directions, that is, directions of three ellipses shown in FIG. 5.

The beam scanning periodicity is 3N, that is, duration for completing one round of SSB sending by the three cells is 3N. However, the three cells in FIG. 3a simultaneously send SSBs in the periodicity N. In this case, compared with FIG. 3a, the sending periodicity in FIG. 5 is extended by three times. The sending periodicity is extended, so that overheads of a common channel may be reduced, and spectral efficiency may be improved; and symbol overheads of the cell downlink fixed resources may be reduced, thereby facilitating energy saving. Further, in a scenario in which an NR system and an LTE system share a frequency spectrum, resources occupied by some NR FDD system messages conflict with a cell-specific reference signal (cell reference signal, CRS) of LTE, resulting in an LTE performance loss. However, by using the configuration manner in Embodiment 1 of this application, the sending periodicity is extended, so that impact on performance of the LTE system caused by a resource conflict may be reduced.

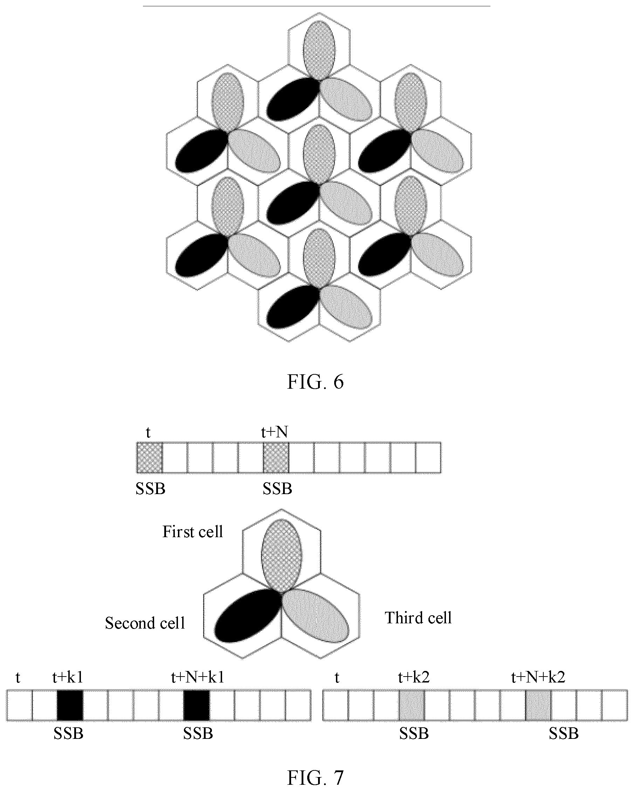

FIG. 6 is a schematic diagram of sending SSBs by a plurality of network devices according to an embodiment of this application. Sending times that are of cell downlink fixed resources and that are configured for cells served by a same network device are different, so that the cell downlink fixed resources sent by the cells are staggered in time domain and space domain, thereby reducing interference between the cell downlink fixed resources sent by the cells, and facilitating an improvement in system performance. In addition, sending times in which neighboring cells of different network devices send cell downlink fixed resources are also different, so that interference between the cell downlink fixed resources sent by the neighboring cells of different network devices may be further reduced.

### Embodiment 2 - Different frame offsets are configured for three cells

FIG. 7 is another schematic diagram of sending an SSB by one network device according to an embodiment of this application. As shown in FIG. 7, an example in which the network device includes three cells (which are respectively a first cell, a second cell, and a third cell), and each cell separately sends an SSB to a terminal device in the cell is used for description. FIG. 7 may be applied to a TDD network.

In FIG. 7, a hexagon represents a cell, and an ellipse represents a beam. An SSB sent by the first cell is represented by a slash, an SSB sent by the second cell is represented by black, and an SSB sent by the third cell is represented by gray. A rectangle in FIG. 7 represents a unit of a sending time. For ease of description, in this embodiment of this application, an example in which the unit of the sending time is a slot (slot) is used for description.

For example, a first cell in a network device i is denoted by Cell [0, i], a second cell in the network device i is denoted by Cell [1, i], and a third cell in the network device i is denoted by Cell [2, i]. The network device respectively configures different frame offsets for the three cells. For example, a frame offset configured for the first cell is 0, a frame offset configured for the second cell is kl, and a frame offset configured for the third cell is k2, where k1 is less than k2. That is, a sending time of the second cell is earlier than a sending time of the third cell, and k1 and k2 are not 0.

The frame offset refers to a time offset of a sending time in which each cell sends an SSB in FIG. 7, relative to a sending time in which three cells simultaneously send SSBs in FIG. 3a. For example, the sending time in which three cells simultaneously send SSBs in FIG. 3a is a slot t, a sending time in which the first cell sends an SSB in FIG. 7 is the slot t, a sending time in which the second cell sends an SSB in FIG. 7 is a slot t + kl, and a sending time in which the third cell sends an SSB in FIG. 7 is a slot t + k2. For another example, the sending time in which three cells simultaneously send SSBs in FIG. 3a is a slot t + N, a sending time in which the first cell sends an SSB in FIG. 7 is the slot t + N, a sending time in which the second cell sends an SSB in FIG. 7 is a slot t + N + kl, and a sending time in which the third cell sends an SSB in FIG. 7 is a slot t + N + k2.

It may be understood that, in FIG. 7, an order in which the network device i sends SSBs is: The first cell sends an SSB in the slot t; the second cell sends an SSB in the slot t + k1; the third cell sends an SSB in the slot t + k2; the first cell sends an SSB in the slot t + N; the second cell sends an SSB in the slot t + N + k1; and the third cell sends an SSB in the slot t + N + k2.

FIG. 6 is a schematic diagram of sending SSBs by a plurality of network devices according to an embodiment of this application. Frame offsets configured for cells served by a same network device are different, so that sending times of cell downlink fixed resources sent by the cells are different. Therefore, the cell downlink fixed resources sent by the cells are staggered in time domain and space domain, thereby reducing interference between the cells, and facilitating an improvement in system performance. In addition, frame offsets configured for neighboring cells of different network devices are different, so that interference between cell downlink fixed resources sent by the neighboring cells of different network devices may be further reduced.

In this way, different frame offsets are configured, so that different cells respectively send cell downlink fixed resources in different slots (slot), thereby implementing isolation in time domain and space domain, and reducing interference.

It should be noted that an example in which neighboring cells belong to a coverage area of a same network device is used in Embodiment 1 and Embodiment 2. For a case in which neighboring cells are neighboring cells of different network devices, also refer to Embodiment 1 and Embodiment 2. A process of exchanging configured sending times or frame offsets between different network devices may be added.

In the foregoing method embodiment, an example in which the network device includes three cells is used. When the network device includes more than three cells, expansion may be performed based on the foregoing method embodiment.

To implement the functions in the methods provided in embodiments of this application, the network device may include a hardware structure and/or a software module, and implement the foregoing functions in a form of the hardware structure, the software module, or a combination of the hardware structure and the software module. Whether a function in the foregoing functions is performed by the hardware structure, the software module, or the combination of the hardware structure and the software module depends on a specific application and design constraint conditions of the technical solutions.

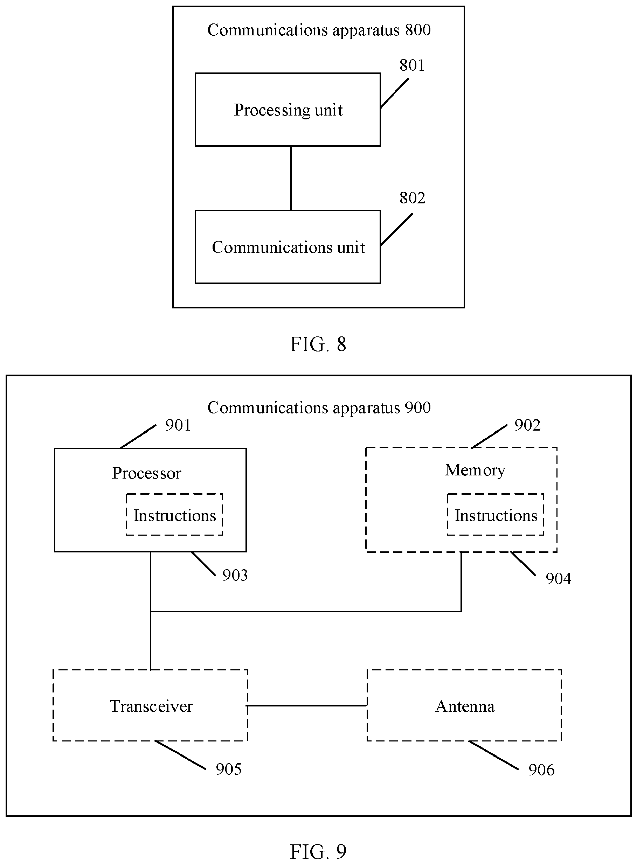

FIG. 8 is a schematic diagram of a structure of a communications apparatus according to an embodiment of this application. The communications apparatus 800 shown in FIG. 8 may include a communications unit 802 and a processing unit 801. The communications unit 802 may include a sending unit and a receiving unit. The sending unit is configured to implement a sending function, and the receiving unit is configured to implement a receiving function. The communications unit 802 may implement the sending function and/or the receiving function. The communications unit may also be described as a transceiver unit.

The communications apparatus has a function of the first network device described in embodiments of this application. For example, the communications apparatus includes a module, a unit, or a means (means) corresponding to a terminal device performing the steps related to the terminal device described in embodiments of this application. The function, the unit, or the means (means) may be implemented by software or hardware, or may be implemented by hardware executing corresponding software, or may be implemented by a combination of software and hardware. For details, refer to the corresponding descriptions in the foregoing corresponding method embodiment.

In a possible design, the communications apparatus 800 may be the first network device, or may be an apparatus in the first network device.

The processing unit 801 is configured to configure a first sending time in which a first cell of the first network device sends a cell downlink fixed resource.

The communications unit 802 is configured to control the first cell to send the cell downlink fixed resource in the first sending time.

The first sending time is different from a sending time in which a neighboring cell of the first cell sends the cell downlink fixed resource, and the first cell and the neighboring cell of the first cell carry a same frequency.

For example, the communications unit 802 is configured to perform step 402 in the embodiment shown in FIG. 4, and the processing unit 801 is configured to perform step 401 in the embodiment shown in FIG. 4.

It may be learned that different sending times of reference signals are configured for a plurality of cells carrying a same frequency, and the plurality of cells are sequentially controlled to send signals based on the configured sending times, so that sent signals do not interfere with each other in time domain and space domain, thereby reducing interference between common channels.

FIG. 9 is a schematic diagram of a structure of another communications apparatus according to an embodiment of this application. The communications apparatus 900 may alternatively be a network device, or may be a chip, a chip system, a processor, or the like that supports the network device in implementing the foregoing method. The communications apparatus may be configured to implement the method described in the foregoing method embodiment. For details, refer to the description in the foregoing method embodiment.

The communications apparatus may include one or more processors 901. The processor 901 may also be referred to as a processing unit, and may implement a specific control function. The processor 901 may be a general-purpose processor, a dedicated processor, or the like. For example, the processor 901 may be a baseband processor or a central processing unit. The baseband processor may be configured to process a communications protocol and communications data. The central processing unit may be configured to: control a communications apparatus (for example, a base station, a baseband chip, a terminal, a terminal chip, a DU, or a CU), execute a software program, and process data of the software program.

In an optional design, the processor 901 may also store instructions and/or data 903, and the instructions and/or data 903 may be run by the processor, so that the communications apparatus 900 performs the method described in the foregoing method embodiment.

In another optional design, the processor 901 may include a communications unit configured to implement receiving and sending functions. For example, the communications unit may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another optional design, the communications apparatus 900 may include a circuit, and the circuit may implement a function of sending, receiving, or communication in the foregoing method embodiment.

Optionally, the communications apparatus 900 may include one or more memories 902, and the one or more memories 902 may store instructions 904. The instructions may be run on the processor, so that the communications apparatus 900 performs the method described in the foregoing method embodiment. Optionally, the memory may further store data. Optionally, the processor may also store instructions and/or data. The processor and the memory may be separately disposed, or may be integrated together. For example, a local sequence described in the foregoing method embodiment may be stored in the memory or the processor.

Optionally, the communications apparatus 900 may further include a transceiver 905 and/or an antenna 906. The processor 901 may be referred to as a processing unit, and controls the communications apparatus 900. The transceiver 905 may be referred to as a communications unit, a transmitter-receiver, a transceiver circuit, a transceiver, or the like, and is configured to implement receiving and sending functions.

In a possible design, a communications apparatus 900 (for example, a network device or a baseband chip) may include:
a processor 901, configured to configure a first sending time in which a first cell of the first network device sends a cell downlink fixed resource; and
a transceiver 905, configured to control the first cell to send the cell downlink fixed resource in the first sending time.

The first sending time is different from a sending time in which a neighboring cell of the first cell sends the cell downlink fixed resource, and the first cell and the neighboring cell of the first cell carry a same frequency.

For example, the transceiver 905 is configured to perform step 402 in the embodiment shown in FIG. 4, and the processor 901 is configured to perform step 401 in the embodiment shown in FIG. 4.

The processor and the transceiver described in this application may be implemented on an integrated circuit (integrated circuit, IC). The IC may include an analog IC, a radio frequency integrated circuit RFIC, a mixedsignal IC, an application-specific integrated circuit (application specific integrated circuit, ASIC), or the like. A printed circuit on a printed circuit board (printed circuit board, PCB) may implement the IC.

The communications apparatus described in the foregoing embodiment may be a network device or a terminal device. However, a scope of the apparatus described in this application is not limited thereto, and a structure of the communications apparatus may not be limited by FIG. 9. The communications apparatus may be:
(1) an independent integrated circuit IC, a chip, or a chip system or subsystem; or
(2) a receiver, a terminal, a cellular phone, a wireless device, a handheld device, a mobile unit, a vehiclemounted device, a network device, a cloud device, an artificial intelligence device, a machinery device, a household device, a medical device, an industrial device, or the like.

It may be understood that, in some scenarios, some optional features in embodiments of this application may be independently implemented without relying on another feature, for example, a solution on which the features are currently based, to resolve a corresponding technical problem, and achieve a corresponding effect. Alternatively, in some scenarios, the optional features may be combined with another feature based on a requirement. Correspondingly, the communications apparatus provided in embodiments of this application may also correspondingly implement these features or functions. Details are not described herein.

A person skilled in the art may further understand that various illustrative logical blocks (illustrative logical blocks) and steps (steps) that are listed in embodiments of this application may be implemented by electronic hardware, computer software, or a combination thereof. Whether the functions are implemented by hardware or software depends on particular applications and a design requirement of an entire system. A person skilled in the art may use various methods to implement the described functions for each particular application, but it should not be considered that the implementation goes beyond the protection scope of embodiments of this application.

It should be noted that the processor in embodiments of this application may be an integrated circuit chip, and has a signal processing capability. In an implementation process, steps in the foregoing method embodiments are implemented by a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these and any memory of another appropriate type.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

A person of ordinary skill in the art may understand that various numeric numbers such as "first" and "second" in this application are merely for ease of description and are not intended to limit the scope of embodiments of this application, and also do not indicate an order.

A correspondence shown in each table in this application may be configured or may be predefined. Values of information in each table are merely examples, and may be configured as other values, which are not limited in this application. When a correspondence between information and each parameter is configured, it is not necessarily required that all correspondences shown in each table need to be configured. For example, in the table in this application, correspondences shown in some rows may not be configured. For another example, proper deformations and adjustments such as splitting and combination may be performed based on the foregoing tables. Names of parameters shown in titles of the foregoing tables may alternatively be other names that can be understood by the communications apparatus, and values or representations of the parameters may alternatively be other values or representations that can be understood by the communications apparatus. When the foregoing tables are implemented, other data structures may alternatively be used, such as an array, a queue, a container, a stack, a linear table, a pointer, a linked list, a tree, a graph, a structure, a class, a heap, a hash table, or a hash table.

"Predefine" in this application may be understood as "define", "predefine", "store", "pre-store", "prenegotiate", "pre-configure", "solidify", or "pre-burn".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for sending a cell downlink fixed resource, wherein the method is applied to a first network device, and the method comprises:
configuring a first sending time in which a first cell of the first network device sends a cell downlink fixed resource; and
controlling the first cell to send the cell downlink fixed resource in the first sending time, wherein
the first sending time is different from a sending time in which a neighboring cell of the first cell sends the cell downlink fixed resource, and the first cell and the neighboring cell of the first cell carry a same frequency.

2. The method according to claim 1, wherein the neighboring cell of the first cell is a second cell served by the first network device, and the sending time in which the second cell sends the cell downlink fixed resource is a second sending time; and
the method further comprises:
controlling the second cell to send the cell downlink fixed resource in the second sending time.

3. The method according to claim 2, wherein the method further comprises:
controlling a third cell of the first network device to send the cell downlink fixed resource in a third sending time, wherein the third sending time is different from both the first sending time and the second sending time, and the third cell and the first cell carry a same frequency.

4. The method according to claim 3, wherein first interval duration between the first sending time and the second sending time is different from second interval duration between the second sending time and the third sending time.

5. The method according to claim 3, wherein first interval duration between the first sending time and the second sending time is the same as second interval duration between the second sending time and the third sending time.

6. The method according to claim 4 or 5, wherein the method further comprises:
controlling the first cell to send the cell downlink fixed resource in a fourth sending time;
controlling the second cell to send the cell downlink fixed resource in a fifth sending time; and
controlling the third cell to send the cell downlink fixed resource in a sixth sending time, wherein
interval duration between the fourth sending time and the fifth sending time is the same as the first interval duration, and interval duration between the fifth sending time and the sixth sending time is the same as the second interval duration.

7. The method according to claim 3, wherein the first cell, the second cell, and the third cell belong to a logical combined cell; and
the controlling the first cell to send the cell downlink fixed resource in the first sending time, controlling the second cell to send the cell downlink fixed resource in the second sending time, and controlling the third cell to send the cell downlink fixed resource in the third sending time comprises:
in a resource sending periodicity of the logical combined cell, controlling the first cell to send the cell downlink fixed resource in the first sending time, controlling the second cell to send the cell downlink fixed resource in the second sending time, and controlling the third cell to send the cell downlink fixed resource in the third sending time.

8. The method according to claim 1, wherein the neighboring cell of the first cell is a fourth cell served by a second network device; and
the method further comprises:
obtaining, from the second network device, a sending time in which the fourth cell sends the cell downlink fixed resource

9. A communications apparatus, wherein the communications apparatus is applied to a first network device, and the apparatus comprises a processor and a transceiver, wherein
the processor is configured to configure a first sending time in which a first cell of the first network device sends a cell downlink fixed resource; and
the transceiver is configured to control the first cell to send the cell downlink fixed resource in the first sending time, wherein
the first sending time is different from a sending time in which a neighboring cell of the first cell sends the cell downlink fixed resource, and the first cell and the neighboring cell of the first cell carry a same frequency.

10. The apparatus according to claim 9, wherein the neighboring cell of the first cell is a second cell served by the first network device, and the sending time in which the second cell sends the cell downlink fixed resource is a second sending time; and
the transceiver is further configured to control the second cell to send the cell downlink fixed resource in the second sending time.

11. The apparatus according to claim 8, wherein
the transceiver is further configured to control a third cell of the first network device to send the cell downlink fixed resource in a third sending time, wherein the third sending time is different from both the first sending time and the second sending time, and the third cell and the first cell carry a same frequency.

12. The apparatus according to claim 9, wherein
first interval duration between the first sending time and the second sending time is different from second interval duration between the second sending time and the third sending time.

13. The apparatus according to claim 9, wherein
first interval duration between the first sending time and the second sending time is the same as second interval duration between the second sending time and the third sending time.

14. The apparatus according to claim 12 or 13, wherein
the transceiver is further configured to control the first cell to send the cell downlink fixed resource in a fourth sending time, control the second cell to send the cell downlink fixed resource in a fifth sending time, and control the third cell to send the cell downlink fixed resource in a sixth sending time, wherein
interval duration between the fourth sending time and the fifth sending time is the same as the first interval duration, and interval duration between the fifth sending time and the sixth sending time is the same as the second interval duration.

15. The apparatus according to claim 11, wherein the first cell, the second cell, and the third cell belong to a logical combined cell; and
the transceiver is specifically configured to: in a resource sending periodicity of the logical combined cell, control the first cell to send the cell downlink fixed resource in the first sending time, control the second cell to send the cell downlink fixed resource in the second sending time, and control the third cell to send the cell downlink fixed resource in the third sending time.

16. The apparatus according to claim 9, wherein the neighboring cell of the first cell is a fourth cell served by a second network device; and
the transceiver is further configured to obtain, from the second network device, a sending time in which the fourth cell sends the cell downlink fixed resource.

17. A communications apparatus, wherein the apparatus comprises a communications unit and a processing unit, so that the apparatus implements the method according to any one of claims 1 to 8.

18. A communications apparatus, wherein the apparatus is configured to perform the method according to any one of claims 1 to 8.

19. A chip, comprising a processor, wherein the processor is coupled to a memory, and the memory is configured to store a program; and when the program is executed by the processor, an apparatus comprising the chip is enabled to perform the method according to any one of claims 1 to 8.

20. A computer-readable storage medium, wherein the computer-readable storage medium is configured to store instructions; and when the instructions are executed, the method according to any one of claims 1 to 8 is implemented.

21. A computer program product, wherein the computer program product comprises computer execution instructions; and when the computer execution instructions are executed, the method according to any one of claims 1 to 8 is implemented.
